# EUROPEAN PATENT APPLICATION

(11) **EP 2 425 700 A2**
(43) Date of publication of application: **07.03.2012**
(21) Application number: 11179141.4
(22) Date of filing: 29.08.2011
(51) Int. Cl.: A01D 34/00

(54) **Switch unit for a device, in particular a lawnmower**

(30) Priority: 02.09.2010 DE 102010044276
(71) Applicant: GGP Italy S.p.A., 31033 Castelfranco Veneto (TV) (IT)
(72) Inventor: Lindermeir, Wolfgang, 89617 Untermarchtal (DE)
(74) Representative: Mittler, Enrico

(57) **Abstract**

The invention relates to a lawnmower and a switch unit (200) for disabling an electrical unit of a device in the event of movement of a first component of the device relative to a second component of the device, characterized in that the switch unit (200) has a switch (1000) and an actuating unit (1004) for actuating the switch and the actuating unit is implemented in such a manner that the switch is actuated in the event of movement of the first component relative to the second component in at least one of the three spatial directions.

## Description

The invention relates to a switch unit for disabling an electrical unit of a device in the event of movement of a first component of the device relative to a second component of the device. In particular, the invention relates to a lawnmower, in particular a self-propelled lawnmower, having a housing and/or a hood as well as a chassis and a cutting unit, the housing and/or the hood being able to move relative to the chassis.

The switch units for disabling an electrical unit of a device are known from various applications in particular in the field of lawnmowers, in particular self-propelled lawnmowers.

Thus, WO 03/103375 A1 discloses a self-propelled device, in particular a self-propelled lawnmower, and a sensor unit, which disables the cutting spindle or the cutting unit of the lawnmower when the lawnmower is raised.

The sensor which detects such raising is an electrical sensor according to WO 03/103375, such as a sensor which detects the raising of the lawnmower with the aid of a permanent magnet and a Hall effect sensor, i.e., electrically, and shuts down the spindle on the basis of this electrical signal, for example, in that the current is interrupted.

In order to detect a movement of a housing relative to a chassis, for example, in the event of a collision, it is provided according to WO 03/103375 that permanent magnets are also used in connection with Hall effect sensors, which are connected directly to the control and navigation system. However, different sensors are required for detecting the raising of the lawnmower than for detecting a collision with an obstruction, for example, during which only a displacement of the housing essentially parallel to the chassis occurs.

The design according to WO 03/103375 has the disadvantage, on the one hand, that multiple different components are required for detecting a movement of a housing relative to a chassis for various directions and, on the other hand, the sensor is exclusively implemented as an electrical component, which requires a continuous power supply in order to detect corresponding displacements or movements of a first component of a device relative to a second component of a device.

A shutdown mechanism for a lawnmower, in particular an autonomously driving lawnmower, is known from DE 10 2008 038 199 A1. The shutdown device known from DE 10 2008 038 199 A1 has the disadvantage that the self-propelled lawnmower is only disabled when it is raised. Detection of obstructions was not provided according to DE 10 2008 038 199 A1.

Self-propelled lawnmowers as a special field of application of the above-mentioned switch unit according to the invention are known from US 4,887,415, EP-A-0550473, US 3,550,714, or DE-A-199 32 552, US 6,650,975, and EP-A-1495661.

Autonomously operating lawnmowers having a horizontally revolving cutting spindle are disclosed, for example, in WO 2007/140930.

The object of the invention is to overcome the above-described disadvantages in the prior art, in particular to specify a simple switch unit, which, in an electrical device, in particular a lawnmower, very particularly preferably an autonomously operating lawnmower, disables this device using a switch in the event of movement of a first component of the device relative to a second component of the device.

According to the invention, in a first aspect of the invention this object is achieved by a switch unit for disabling an electrical unit of a device in the event of movement of a first component of the device relative to a second component of the device, which is distinguished in that the switch unit has a switch and an actuating unit for actuating the switch and the actuating unit is designed in such a manner that the switch is actuated in the event of movement of the first component relative to the second component in at least one of the three spatial directions. The electrical unit is preferably a cutting unit or mowing assembly and the device is preferably a lawnmower, in particular an autonomously driving lawnmower.

In order to disable the unit in the event of a collision with an object in which the housing is displaced essentially parallel to the chassis, the switch unit comprises an actuating unit, which is guided in a first sleeve of the first component of the unit, in particular the chassis, the actuating unit comprising a pressure part, which moves in a direction perpendicular to the parallel direction in the first sleeve and thus actuates the switch in the event of a movement of the first component relative to the second component in the essentially parallel direction.

In order to also detect raising of the device, in particular the lawnmower, the actuating unit further comprises a second sleeve, which is situated in the first sleeve and is implemented in such a manner that in the event of a movement of the first component relative to the second component essentially in the vertical direction, the switch is actuated.

The movements of the housing relative to the chassis are preferably transmitted to the actuating unit in that the first component is connected to the actuating unit via a bearing element.

In the event of movement of the first component relative to the second component in the essentially parallel direction, the bearing element preferably acts on a pressure part, which in turn actuates the switch.

In the event of movement of the first component essentially perpendicular to the second component, the bearing element is preferably implemented in such a manner that the second sleeve moves within the first sleeve, so that the first sleeve actuates the switch via an element in a receptacle.

In order to implement the switch unit as compactly as possible, the switch of the switch unit is implemented as a microswitch.

The microswitch can be implemented in two ways, as an opener or as a closer. In a first design as a closer, the switch has a first electrical contact, which comes into contact with at least one second electrical contact in the event of movement of the first component relative to the second component, i.e., it is an open switch, which is closed in the event of movement of the first component relative to the second component.

Alternatively, an opener can be provided, in which the microswitch has a first electrical contact, which is in electrical contact with a second electrical contact, the first electrical contact losing contact from the second electrical contact in the event of a movement of a first component of the device relative to a second component of the device.

The switch unit is preferably used in a lawnmower, in particular a self-propelled lawnmower.

Therefore, the invention also provides a lawnmower, in particular a self-propelled lawnmower, having
- a housing and/or a hood
- a chassis
- a cutting unit,
which is characterized in that the lawnmower is equipped with a switch unit, which disables at least the cutting unit when the housing and/or the hood is moved relative to the chassis in at least one of the spatial directions.

In relation to the prior art in the form of WO 03/103375, for example, the switch unit is distinguished in that it senses or detects the displacement of the chassis relative to the housing essentially purely mechanically, in particular practically without current if an open switch is used. Furthermore, in contrast to the embodiment according to WO 03/103375, it is a single component which can detect a displacement in all three spatial directions.

The invention is described hereafter on the basis of the exemplary embodiments without restriction thereto.

In the figures:
Figure 1 shows a three-dimensional view of the chassis of a self-propelled lawnmower having a cutting device, which revolves around a vertical axis and comprises at least one cutting blade;
Figure 2 shows a view of an autonomously driving lawnmower according to Figure 1, the chassis being enclosed by a fairing or a housing;
Figure 3 shows a detail view of a switch unit for detecting a housing relative to a chassis, housing and chassis not being displaced.
Figure 4 shows a detail view of a switch unit, the housing being displaced essentially parallel to the chassis;
Figure 5 shows a detail view of a switch unit, the housing being displaced essentially perpendicularly to the chassis.

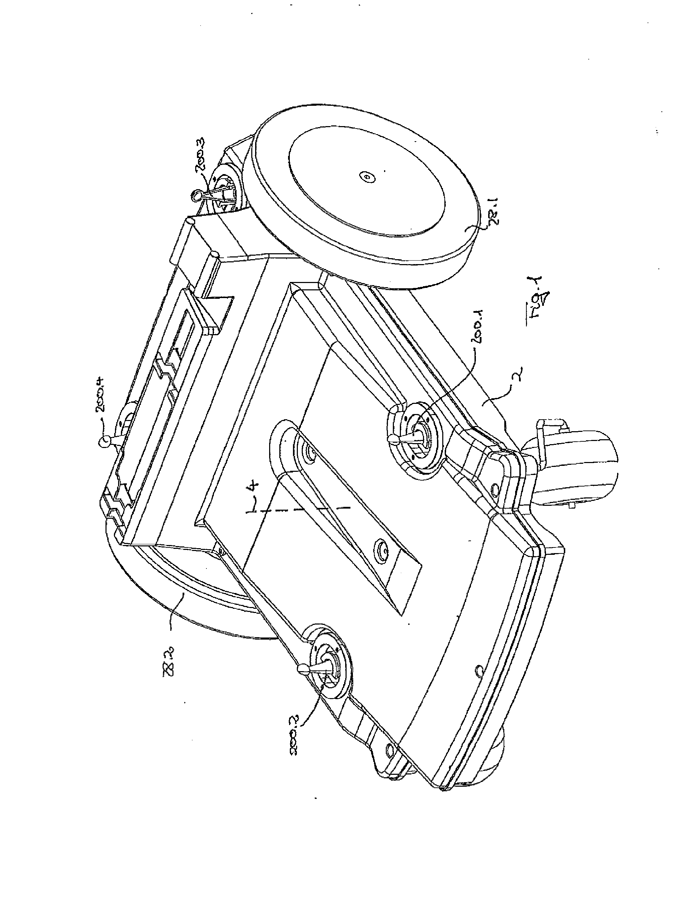

A three-dimensional view of a chassis of a self-propelled lawnmower is shown in Figure 1.

The frame or the chassis 2 of the self-propelled lawnmower comprises a receptacle for an electric motor (not shown), which drives a cutting unit, which rotates essentially around a vertical axis 4, having at least one cutting blade (not shown). The cutting unit preferably has a blade carrier, on which the blades are situated so they are freely rotatable around an axis. The blades only move outside the blade carrier because of centrifugal force during rotation of the cutting unit around the axis 4. The frame parts of the frame 2 are held together by crossbeams (not shown). Storage units, in particular in the form of rechargeable battery cells (not shown) are situated in turn on the crossbeams as the power supply for the drive of the cutting blade and/or the drive wheels. In addition to the drive motor of the cutting unit, the rechargeable battery cells power two drive motors, which each drive one of the drive wheels 28.1, 28.2. In addition to the drive wheels 28.1, 28.2, guide wheels 30.1, 30.2 are provided. The guide wheels 30.1, 30.2 are implemented as pivotable. If one situates the battery cells 26.1, 26.2 (not shown) over the drive wheels (28.1, 28.2), sufficient traction of the autonomously operating mower is provided even when traveling on hills.

Optionally, the batteries could be implemented as displaceable along rails (not shown). In this manner, the center of gravity of the autonomously driving lawnmower can be adapted to various terrain conditions.

The cutting height of the cutting mechanism - the blade carrier having cutting blade here - can be set by an electric motor, which raises and lowers a spindle 25, the drive motor of the cutting unit, and the cutting unit itself. The height adjustment of the cutting device can also be performed manually, however. In the case of a motorized height adjustment, it is possible to couple it via a control signal to the electronics of the autonomously operating lawnmower. The electronics are also housed in the chassis 2. If the power consumption of the blade is detected via a sensor (not shown) by the electronics, the cutting height could be set via the motorized drive of the cutting unit as a function of the recorded power signal. In this manner, an optimum cutting height would always be ensured, even if the cutting height of the grass changed. In a further advantageous embodiment (not shown), the self-propelled lawnmower comprises a sliding linkage and may be changed over from automatic operation to manual operation. In this manner, it is possible to mow lawn surfaces which could not be mowed automatically, for example.

*Inter alia,* the electronics also regulate the drive of the self-propelled lawnmower, in addition to the drive of the cutting unit. If the lawnmower is put into operation, the electronics ensure that the cutting unit is raised. The power consumption during startup of the mower is thus reduced. If the blade has been brought to operating speed, the flywheel mass of the blade is used for the purpose of causing the blade to rotate further with reduced power consumption.

The drive of the wheels is also regulated. A regulating unit is preferably stored in the electronics, which allows a controlled movement of the self-propelled autonomous lawnmower on the lawn surface to be cut. In addition to a controlled movement, the self-propelled robot could also be regulated so that it performs a so-called "random walk", i.e., a random movement.

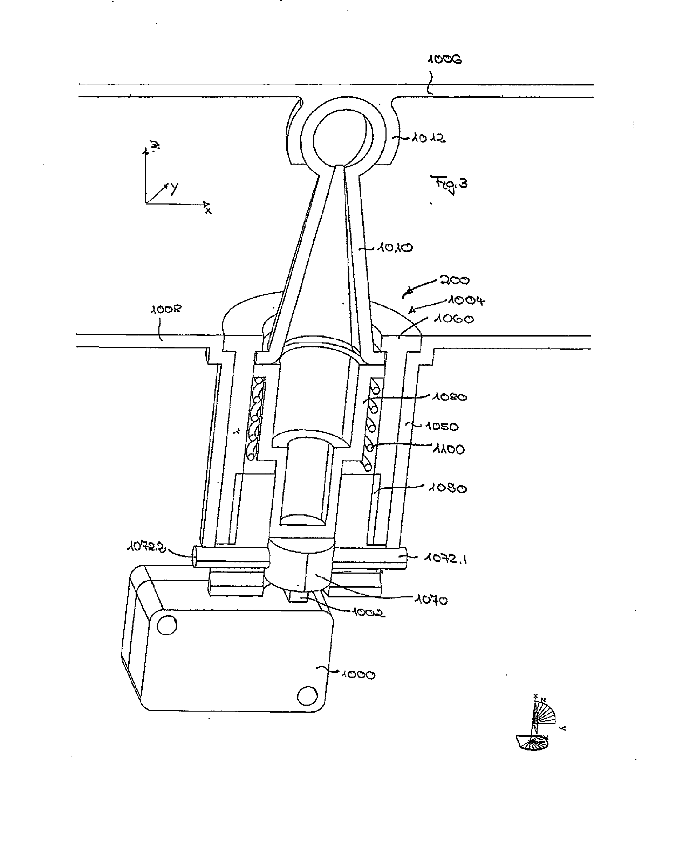

A total of four of the switch units according to the invention 200.1, 200.2, 200.3, 200.4 are provided on the chassis, which detect a movement of a housing, which is situated on the chassis, in all three spatial directions, the x, y, and z directions. The switch units and their mode of operation are described in detail hereafter in Figure 3 to Figure 5.

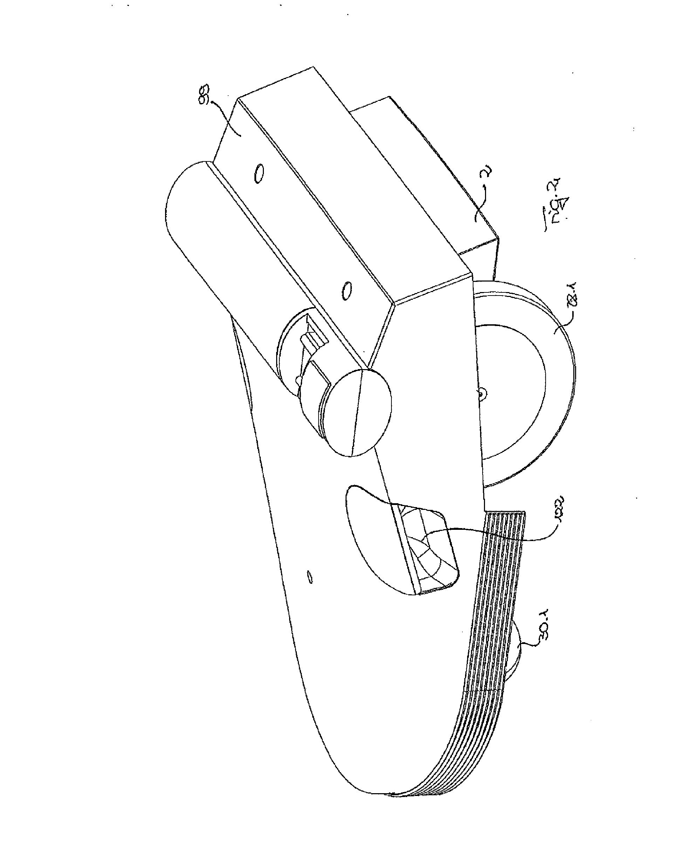

A mower having a housing situated on the frame is shown in Figure 2.

A rear view of the mower according to the invention, which has a housing or a fairing 99 (not shown in Figure 1), is shown in Figure 2.

One of the drive wheels 28.1 is clearly shown. Furthermore, a carrying handle 122, which is integrated in the fairing or the housing 99 and using which the lawnmower can be raised by operator, is shown. A switch unit (not shown) can be located below the carrying handle 122. If an operator grasps the carrying handle 122, he must automatically press the switch unit 124, which is implemented as a safety switch, upward. Through the upward movement of the switch, a first contact provided in the carrying handle is brought into contact with a second contact of the safety switch. The two contacts produce an electrical connection, which has the result that the blade is immediately disabled. In addition to the mowing blade, i.e., the mowing mechanism, other drives, such as the movement drive, could also be disabled by the safety switch.

In order to detect in a simple manner when a lawnmower having a chassis 2 and a housing 99, as shown as an example in Figures 1 and 2, runs into an obstruction and/or is raised at a point other than the carrying handle, the switch units 200.1, 200.2, 200.3, 200.4 according to the invention may be provided between frame and housing as shown in Figures 3 to 5. The switch units 200.1, 200.2, 200.3, 200.4 according to the invention, identified in short by 200 in Figures 3 to 5, comprise a microswitch 1000 having a switch button 1002, the microswitch being designed in such a manner that in the illustrated position, the microswitch is open and is only closed by pressing the switch button. The actuation of the switch button is performed with the aid of an actuating unit 1004, which is to be described in greater detail hereafter.

The actuating unit 1004 is used for the purpose of detecting a displacement of the housing 1006 in relation to the chassis 1008. In the present embodiment here, the chassis 1006 is connected via a bearing element 1010 to the actuating unit 1004. Furthermore, a coordinate system 1020 is indicated in Figure 3. The coordinate system 1020 comprises an x direction, a y direction, and a z direction. If the housing 1006 moves essentially in the x direction and/or the y direction, i.e., in the plane spanned by the x and y directions, the movement of the housing occurs essentially parallel to the chassis or frame. The z direction identifies the direction which is essentially perpendicular to the housing or chassis plane.

On the housing 1006 itself, the bearing element is received in a bearing receptacle 1012, the bearing receptacle 1012 having an essentially spherical shape, so that the bearing element can be deflected in all three spatial directions, i.e., in the x direction, y direction, and z direction shown in the coordinate system.

The actuating unit 1004 comprises a first sleeve 1050, which is essentially part of the chassis or frame 1008. A second sleeve 1060 is introduced into the first sleeve 1050, which can move essentially in the z direction within the first sleeve 1050. The microswitch 1002 is preferably triggered by a cylinder 1070 having a shaft 1072.1, 1072.2. The pressure cylinder 1070 is mechanically activated by the actuating unit 1004 in such a manner that it presses down the microswitch 1002 in various housings 1006 relative to the chassis 1008. Furthermore, the actuating unit comprises a pressure part 1080, which lies between the bearing element 1010 and the cylinder 1070. The pressure part 1070 moves essentially in the z direction in a switch receptacle 1090. A spring 1100 is introduced between pressure part 1080 and switch receptacle 1090.

The spring is used for the purpose of bringing the switch unit back into the base position shown in Figure 3 upon deflection in the x direction or y direction and pressing down the housing in the z direction.

Figure 3 shows a state of the switch unit according to the invention having the actuating unit 1004 and the bearing element 1010 for attachment to the housing 1006 in a position in which the switch is not actuated, i.e., is in the base position, and thus the mowing mechanism or the cutting blade is not disabled. For this purpose, it is necessary for the microswitch, which is implemented as an open switch in the present embodiment, to be closed in order to disable the mowing mechanism, in particular the cutting blade.

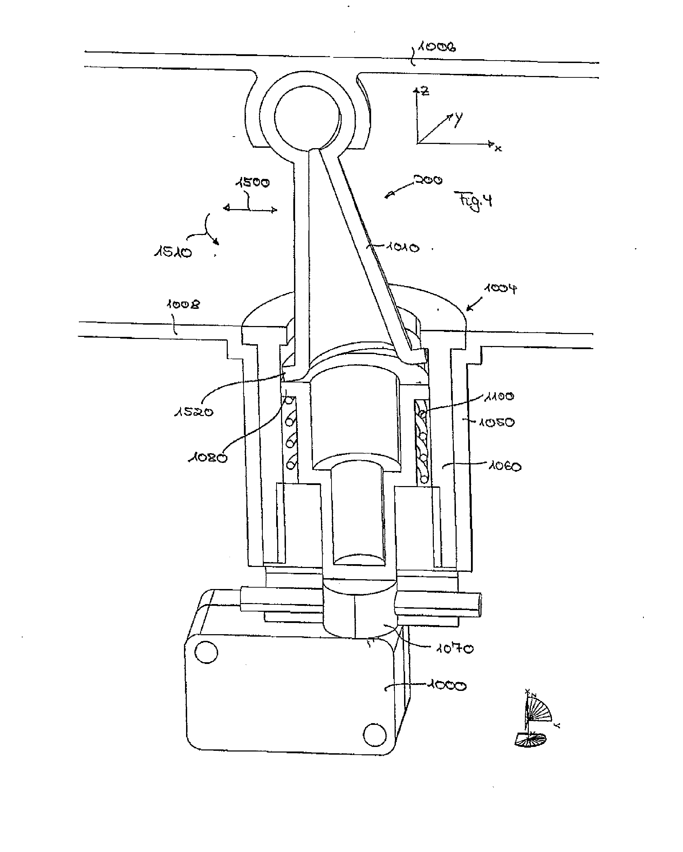

Such disabling by a switch unit according to the invention having a bearing element 1010 and an actuating unit 1004 is shown in Figure 4. Through the displacement of the housing 1006 parallel to the chassis 1008, i.e., essentially in the x and/or y direction or in the x-y plane, the lateral movement 1500 of the bearing part 1010 is converted into a tilting movement 1510, which has the result that the part 1520 presses down the pressure part 1080 essentially in the z direction, on the cylinder 1070, which in turn acts on the switch 1002 (not shown) and thus closes the microswitch, whereby the mowing mechanism is disabled. Identical components as in Figure 3 are again identified using the same reference numerals.

As shown in Figure 4, through the configuration, in the event of a parallel displacement, i.e., a displacement in the x-y plane of the housing relative to the chassis, for example, in the event of an impact on an obstruction, the mowing mechanism is thus disabled by the device according to the invention.

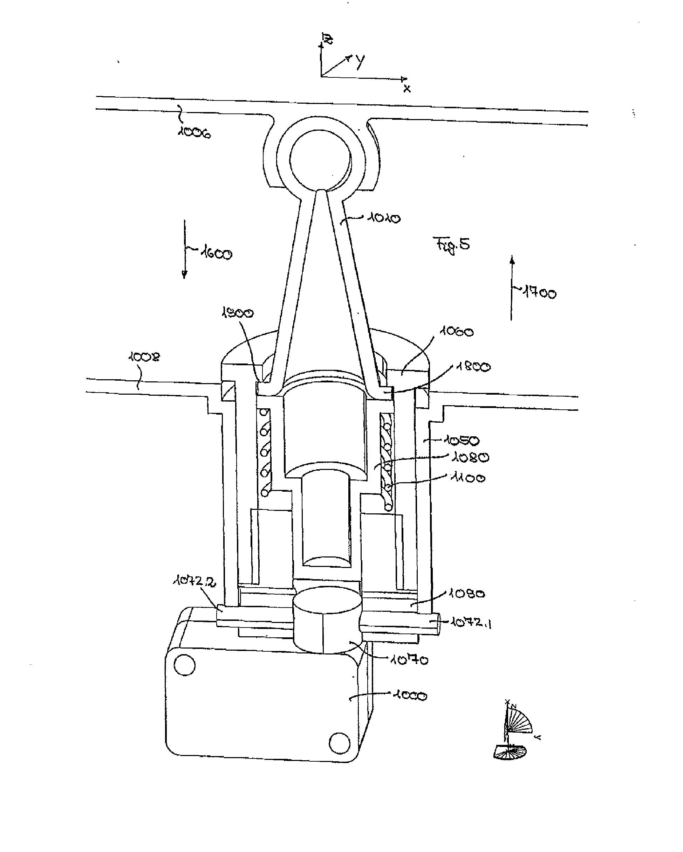

In Figure 5, the actuation of the switch is shown in the event of a movement in the z direction, i.e., perpendicular to the chassis 1008 of the housing 1006. Identical reference numerals as in the above-mentioned figures are again used for the same components. If the hood or the housing 1006 is pressed against the chassis 1008, i.e., in the direction 1600, the pressure part 1080 is pressed against the cylinder 1070, which in turn acts on the switch button (not shown) of the microswitch. This design is obvious for a person skilled in the art and is therefore not shown. In contrast, if the lawnmower is raised, a shutdown of the cutting mechanism is also to be reliably ensured. In the event of such a movement, the movement also occurs in the z direction, namely in the direction 1700. In such a case, via the bearing element 1010 and the stop 1800 of the bearing element, which engages with the stop 1900 of the second sleeve 1060, the second sleeve 1060 is raised in the direction 1700 and lifted out of the first sleeve 1050, which is implemented by the chassis 1008. This has the result that because of the weight force, the chassis acts via the first sleeve 1050 on the pins 1072.1, 1072.2 of the cylindrical component 1070. The cylindrical component 1070 thus acts on the switch button (not shown) of the microswitch 1000 and actuates it, so that the mowing mechanism is disabled.

The pins 1072.1, 1072.2 move downward in the switch receptacle 1090 in the event of such a movement.

For the first time, a switch unit is thus provided by the invention which reliably ensures disabling of an electrical unit, such as a mowing mechanism, in particular the cutting blade in a lawnmower, when a housing of the lawnmower is displaced in relation to the chassis in one of the three spatial directions. In this way, with the aid of a single sensor, collisions of the mower may be detected, and also states in which the mower is raised or pressed down, i.e., the mowing surface which is to be mown automatically is removed.

## Claims

1. A switch unit (200) for disabling an electrical unit of a device in the event of movement of a first component of the device relative to a second component of the device, **characterized in that** the switch unit (200) has a switch (1000) and an actuating unit (1004) for actuating the switch (1000) and the actuating unit (1004) is designed in such a manner that the switch (1000) is actuated in the event of movement of the first component relative to the second component in at least one of the three spatial directions.

2. The switch unit (200) according to Claim 1, **characterized in that** the actuating unit (1004) is guided in a first sleeve (1050) of the first component of the unit, in particular the chassis (1006), the actuating unit (1004) comprising a pressure part (1080), which moves in a direction perpendicular to the parallel direction in the first sleeve (1050) in the event of a movement of the first component relative to the second component in the essentially parallel direction, and the switch (1000) is thus actuated.

3. The switch unit (200) according to one of Claims 1 to 2, **characterized in that** the actuating unit (1004) further comprises a second sleeve (1060), which is situated in the first sleeve (1050) and is implemented in such a manner that in the event of a movement of the first component relative to the second component in the essentially perpendicular direction, the switch (1000) is actuated.

4. The switch unit (200) according to one of Claims 1 to 3, **characterized in that** the first component is connected to the actuating unit (1004) via a bearing element (1010).

5. The switch unit (200) according to Claim 2, **characterized in that** the bearing element (1010) acts on a pressure part (1080) to actuate the switch in the event of movement of the first component relative to the second component in the essentially parallel direction.

6. The switch unit (200) according to Claim 3, **characterized in that** the bearing element (1010) is implemented in such a manner that the bearing element (1010) moves the second sleeve (1060) inside the first sleeve (1050) and/or the pressure part (1080) in the event of movement of the first component essentially perpendicular to the second component, so that the first sleeve and/or the pressure part (1070) actuate the switch via a part.

7. The switch unit (200) according to one of Claims 1 through 6, **characterized in that** the electrical device is a lawnmower, in particular a self-propelled lawnmower.

8. The switch unit (200) according to one of Claims 1 through 7, **characterized in that** the electrical unit is a cutting unit, in particular a mowing mechanism.

9. A lawnmower, in particular a self-propelled lawnmower, having a housing and/or a hood (99, 1006)
a chassis (2, 1008)
a cutting unit,
**characterized in that** the lawnmower is equipped with a switch unit (200.1, 200.2, 200.3, 200.4), which disables at least the cutting unit when the housing (99, 1006) and/or the hood is moved relative to the chassis (2, 1008) in at least one of the spatial directions (x, y, z).

10. The lawnmower according to Claim 9, **characterized in that** the switch unit (200.1, 200.2, 200.3, 200.4) is a switch unit (200) according to one of Claims 1 to 11.
